(19)

Europäisches
Patentamt
European
Patent Office
Office européen
des brevets

(11) **EP 4 780 055 A1**

(12) **EUROPEAN PATENT APPLICATION**
published in accordance with Art. 153(4) EPC

(43) Date of publication:
**22.07.2026 Bulletin 2026/30**

(21) Application number: **24870595.6**

(22) Date of filing: **20.09.2024**

(51) International Patent Classification (IPC):
***H04W 24/08*** (2009.01)

(52) Cooperative Patent Classification (CPC):
**H04L 5/00; H04W 24/08; H04W 72/0446;
H04W 72/20**

(86) International application number:
**PCT/CN2024/119943**

(87) International publication number:
**WO 2025/067051 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311284114**

(71) Applicant: **HUAWEI TECHNOLOGIES CO., LTD.
Shenzhen, Guangdong 518129 (CN)**

(72) Inventors:
- **LU, Jianzhong
  Shenzhen, Guangdong 518129 (CN)**
- **XIE, Xinqian
  Shenzhen, Guangdong 518129 (CN)**
- **SHAO, Jiafeng
  Shenzhen, Guangdong 518129 (CN)**

(74) Representative: **Isarpatent
Patent- und Rechtsanwälte Part G mbB
Friedrichstrasse 31
80801 München (DE)**

(54) **COMMUNICATION METHOD AND COMMUNICATION APPARATUS**

(57) A communication method and a communication apparatus are provided, to configure sensing-related information to meet a sensing requirement. The method includes: receiving first indication information; and receiving a first signal in M time units in a first time period, and performing sensing by using the first signal. The first indication information includes information indicating the M time units occupied by the first signal; or the first indication information includes information indicating the M time units occupied by the first signal, and at least one of: information used to determine a first signal sequence or information used to determine a time domain coefficient of the first signal; or the first indication information includes information used to determine a first signal sequence and information used to determine a time domain coefficient of the first signal, where a value of M belongs to a first value set, and the first value set includes a part or all of 40, 44, 64, 70, 71, 80, 81, 123, 128, 142, 160, 256, 283, or 320.

400

FIG. 4

EP 4 780 055 A1

**Description**

This application claims priority to Chinese Patent Application No. 202311284114.9, filed with the China National Intellectual Property Administration on September 28, 2023 and entitled "COMMUNICATION METHOD AND COMMUNICATION APPARATUS", which is incorporated herein by reference in its entirety.

**TECHNICAL FIELD**

This application relates to the communication field, and more specifically, to a communication method and a communication apparatus.

**BACKGROUND**

With the development of communication technologies, an integrated sensing and communication technology is considered as one of the key technologies that can expand a service capability of a mobile communication network. This technology aims to integrate wireless communication and sensing functions into a same system, and use various propagation characteristics of radio signals to construct a capability of detecting, tracking, and imaging a target, so that wireless communication and sensing capabilities are integrated into one network, thereby achieving harmonious coexistence, and even mutual benefit.

To reduce sensing resource overheads, currently, a solution of multiplexing a communication resource and a sensing resource is proposed. For example, sensing is performed by using a positioning reference signal (positioning reference signal, PRS). Currently, it is difficult to meet a sensing requirement based on a configuration of the sensing resource.

**SUMMARY**

This application provides a communication method and a communication apparatus, to configure sensing-related information, to meet a sensing requirement.

According to a first aspect, a communication method is provided, including: receiving first indication information; and receiving a first signal in M time units in a first time period based on the first indication information, and performing sensing by using the first signal. The first indication information includes information indicating the M time units occupied by the first signal in the first time period; or the first indication information includes information indicating the M time units occupied by the first signal in the first time period, and at least one of: information used to determine a first signal sequence or information used to determine a time domain coefficient of the first signal; or the first indication information includes information used to determine a first signal sequence and information used to determine a time domain coefficient of the first signal, where the first signal sequence and the time domain coefficient of the first signal are used to determine the first signal; and a value of M belongs to a first value set, and the first value set includes a part or all of 40, 44, 64, 70, 71, 80, 81, 123, 128, 142, 160, 256, 283, or 320.

The method in the first aspect may be performed by a terminal device, or may be performed by a chip in the terminal device.

According to the communication method in embodiments of this application, a related resource of a sensing signal is configured, for example, information such as a time unit occupied by the sensing signal, a signal sequence used to send the sensing signal, and a time domain coefficient of the sensing signal is configured, so that the terminal device can receive the sensing signal based on the information, and perform sensing. A quantity M of time units configured in embodiments of this application is selected from the preset first value set, so that a sensing requirement can be met.

It should be understood that the time unit in embodiments of this application is a unit of a time domain resource, for example, may be a slot (slot), a subframe (subframe), a symbol (symbol), or another time unit defined in the future. It should be noted that the time unit is a measurement unit of time domain, and is not necessarily a minimum time unit.

It should be further understood that the first time period in embodiments of this application is coherent processing time.

With reference to the first aspect, in a possible implementation of the first aspect, the first signal sequence is determined based on a pseudo-random sequence, an initial value of the pseudo-random sequence is determined based on a first value, and a value of the first value is indicated by the information used to determine the first signal sequence.

With reference to the first aspect, in a possible implementation of the first aspect, the first signal sequences in different time units are the same.

The first signal sequence in embodiments of this application is fixed in same coherent processing time, and does not change with a change in a time domain resource position. When a network device performs echo signal coherent accumulation, an interference signal is concentrated in an area near a zero speed in a velocity-range spectrum, and affects only detection of a low-speed or zero-speed target, but does not affect detection of another target. This helps improve sensing performance.

With reference to the first aspect, in a possible implementation of the first aspect, the initial value c of the pseudo-random sequence satisfies any one of the following:

$$c = (2^{10} \times (2 \times N + 1) + N) \bmod 2^{31},$$

or

$$c = \left(2^{22} \times \left\lfloor \frac{N}{1024} \right\rfloor + 2^{10} \times (2 \times (N \bmod 1024) + 1) + (N \bmod 1024)\right) \bmod 2^{31},$$

or

$$c = (2^{17} \times (2 \times N + 1) + 2 \times N) \bmod 2^{31},$$

where
N indicates the first value, and N is an integer greater than or equal to 0.

With reference to the first aspect, in a possible implementation of the first aspect, the time domain coefficient of the first signal includes M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

For example, N is a cell identity (identity, ID), namely, a function of a cell ID of the initial value of the pseudo-random sequence.

For example, N is a PRS sequence ID, namely, a function of a PRS sequence ID of the initial value of the pseudo-random sequence.

It should be understood that N may be agreed on in a protocol, or may be configured by the network device by using higher layer signaling. This is not limited in embodiments of this application.

With reference to the first aspect, in a possible implementation of the first aspect, the first value set includes 40, 64, 80, 128, 160, 256, and 320; or the first value set includes 64, 128, and 256; or the first value set includes 44, 71, 81, 123, 142, and 283; or the first value set includes 44, 70, 81, 123, 142, and 283; or the first value set includes 44, 70, 81, 123, and 142.

With reference to the first aspect, in a possible implementation of the first aspect, the method further includes: performing positioning measurement by using the first signal.

With reference to the first aspect, in a possible implementation of the first aspect, performing sensing by using the first signal includes: accumulating echo signals in the first time period by using the first signal; and performing sensing, to obtain a sensing result.

According to a second aspect, another communication method is provided, including: sending first indication information; and sending a first signal in M time units in a first time period. The first indication information includes information indicating the M time units occupied by the first signal in the first time period; or the first indication information includes information indicating the M time units occupied by the first signal in the first time period, and at least one of: information used to determine a first signal sequence or information used to determine a time domain coefficient of the first signal; or the first indication information includes information used to determine a first signal sequence and information used to determine a time domain coefficient of the first signal, where the first signal sequence and the time domain coefficient of the first signal are used to determine the first signal; and a value of M belongs to a first value set, and the first value set includes a part or all of 40, 44, 64, 70, 71, 80, 81, 123, 128, 142, 160, 256, 283, or 320.

The method in the second aspect may be performed by a network device, or may be performed by a chip in the network device.

With reference to the second aspect, in a possible implementation of the second aspect, the first signal sequence is determined based on a pseudo-random sequence, an initial value of the pseudo-random sequence is determined based on a first value, and a value of the first value is indicated by the information used to determine the first signal sequence.

With reference to the second aspect, in a possible implementation of the second aspect, the first signal sequences in different time units are the same.

With reference to the second aspect, in a possible implementation of the second aspect, the initial value c of the pseudo-random sequence satisfies any one of the following:

$$c = (2^{10} \times (2 \times N + 1) + N) \bmod 2^{31},$$

or

$$c = \left(2^{22} \times \left\lfloor \frac{N}{1024} \right\rfloor + 2^{10} \times (2 \times (N \bmod 1024) + 1) + (N \bmod 1024)\right) \bmod 2^{31},$$

or

$$c = (2^{17} \times (2 \times N + 1) + 2 \times N) \bmod 2^{31},$$

where

N indicates the first value, and N is an integer greater than or equal to 0.

With reference to the second aspect, in a possible implementation of the second aspect, the time domain coefficient of the first signal includes M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

With reference to the second aspect, in a possible implementation of the second aspect, the first value set includes 40, 64, 80, 128, 160, 256, and 320; or the first value set includes 64, 128, and 256; or the first value set includes 44, 71, 81, 123, 142, and 283; or the first value set includes 44, 70, 81, 123, 142, and 283; or the first value set includes 44, 70, 81, 123, and 142.

With reference to the second aspect, in a possible implementation of the second aspect, the method further includes: accumulating echo signals in the first time period by using the first signal; and performing sensing, to obtain a sensing result.

According to a third aspect, another communication method is provided, including: receiving second indication information, where the second indication information includes information used to determine a first signal sequence and information used to determine a time domain coefficient of a first signal, and the first signal is determined based on the first signal sequence and the time domain coefficient of the first signal; and receiving the first signal in M time units in a first time period based on the second indication information, and performing sensing by using the first signal. The first signal sequence is determined based on a pseudo-random sequence, and an initial value of the pseudo-random sequence is determined based on a first value. A value of the first value is indicated by the information used to determine the first signal sequence; a value of the first value is predefined; or a value of the first value is indicated by third indication information, and the third indication information is carried in higher layer signaling.

The method in the third aspect may be performed by a terminal device, or may be performed by a chip in the terminal device.

With reference to the third aspect, in a possible implementation of the third aspect, the first signal sequences in different time units are the same.

With reference to the third aspect, in a possible implementation of the third aspect, the initial value c of the pseudo-random sequence satisfies any one of the following:

$$c = (2^{10} \times (2 \times N + 1) + N) \bmod 2^{31},$$

or

$$c = \left(2^{22} \times \left\lfloor \frac{N}{1024} \right\rfloor + 2^{10} \times (2 \times (N \bmod 1024) + 1) + (N \bmod 1024)\right) \bmod 2^{31},$$

or

$$c = (2^{17} \times (2 \times N + 1) + 2 \times N) \bmod 2^{31},$$

where

N indicates the first value, and N is an integer greater than or equal to 0.

With reference to the third aspect, in a possible implementation of the third aspect, the time domain coefficient of the first signal includes M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

According to a fourth aspect, another communication method is provided, including: sending second indication information, where the second indication information includes information used to determine a first signal sequence and information used to determine a time domain coefficient of a first signal, and the first signal is determined based on the first signal sequence and the time domain coefficient of the first signal; and sending the first signal in M time units in a first time period. The first signal sequence is determined based on a pseudo-random sequence, and an initial value of the pseudo-random sequence is determined based on a first value. A value of the first value is indicated by the information used to determine the first signal sequence; a value of the first value is predefined; or a value of the first value is indicated by third indication information, and the third indication information is carried in higher layer signaling.

The method in the fourth aspect may be performed by a network device, or may be performed by a chip in the terminal device.

With reference to the fourth aspect, in a possible implementation of the fourth aspect, the first signal sequences in different time units are the same.

With reference to the fourth aspect, in a possible implementation of the fourth aspect, the initial value c of the pseudo-random sequence satisfies any one of the following:

$$c = \left(2^{10} \times (2 \times N + 1) + N\right) \bmod 2^{31},$$

or

$$c = \left(2^{22} \times \left\lfloor \frac{N}{1024} \right\rfloor + 2^{10} \times (2 \times (N \bmod 1024) + 1) + (N \bmod 1024)\right) \bmod 2^{31},$$

or

$$c = \left(2^{17} \times (2 \times N + 1) + 2 \times N\right) \bmod 2^{31},$$

where

N indicates the first value, and N is an integer greater than or equal to 0.

With reference to the fourth aspect, in a possible implementation of the fourth aspect, the time domain coefficient of the first signal includes M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

According to a fifth aspect, a communication apparatus is provided, configured to perform the method according to any possible implementation of the first aspect to the fourth aspect. Specifically, the apparatus includes a module configured to perform the method according to any possible implementation of the first aspect to the fourth aspect.

According to a sixth aspect, this application provides another communication apparatus, including a processor that can be configured to execute instructions, to implement the method in any possible implementation of the first aspect to the fourth aspect. Optionally, the communication apparatus further includes a memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip disposed in the terminal device, the communication interface may be an input/output interface.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the network device, the communication interface may be an input/output interface.

According to a seventh aspect, a processor is provided, including an input circuit, an output circuit, and a processing circuit. The processing circuit is configured to: receive a signal through the input circuit, and transmit a signal through the output circuit, so that the processor performs the method according to any possible implementation of the first aspect to the fourth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and entered by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to read instructions stored in the memory, and may receive a signal through a receiver, and transmit a signal through a transmitter, to perform the method according to any possible implementation of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory like a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process like sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processing apparatus in the seventh aspect may be a chip. The processor may be implemented by using hardware or software. When the processor is implemented by using hardware, the processor may be a logic circuit, an integrated circuit, or the like. When the processor is implemented by using software, the processor may be a general purpose processor, and is implemented by reading software code stored in a memory. The memory may be integrated into the processor, or may be located outside the processor and exist independently.

According to a ninth aspect, a computer program product is provided. The computer program product includes a computer program (which may also be referred to as code or instructions). When the computer program is run, a computer is enabled to perform the method according to any possible implementation of the first aspect to the fourth aspect.

According to a tenth aspect, a computer-readable storage medium is provided. The computer-readable storage medium stores a computer program (which may also be referred to as code or instructions). When the computer program is run on a computer, the computer is enabled to perform the method according to any possible implementation of the first aspect to the fourth aspect.

According to an eleventh aspect, a communication system is provided. The system includes a device configured to implement any one of the first aspect or the possible implementations of the first aspect and a device configured to implement any one of the second aspect or the possible implementations of the second aspect. Alternatively, the system includes a device configured to implement any one of the third aspect or the possible implementations of the third aspect and a device configured to implement any one of the fourth aspect or the possible implementations of the fourth aspect.

**BRIEF DESCRIPTION OF DRAWINGS**

FIG. 1 is a diagram of a communication system to which embodiments of this application are applicable;
FIG. 2 is a diagram of application scenarios in different sensing modes;
FIG. 3 is a diagram of mapping of PRS time-frequency resources;
FIG. 4 is a schematic flowchart of a communication method according to an embodiment of this application;
FIG. 5 is a diagram of different slot configurations;
FIG. 6 is a diagram of a time domain configuration of a sensing signal in a 4:1 slot configuration;
FIG. 7 is a diagram of a time domain configuration of a sensing signal in an 8:2 single-periodicity slot configuration;
FIG. 8 is a diagram of another time domain configuration of a sensing signal in a 4:1 slot configuration;
FIG. 9 is a schematic flowchart of another communication method according to an embodiment of this application;
FIG. 10 is a block diagram of a communication apparatus according to an embodiment of this application;
FIG. 11 is a block diagram of another communication apparatus according to an embodiment of this application; and
FIG. 12 is a block diagram of another communication apparatus according to an embodiment of this application.

**DESCRIPTION OF EMBODIMENTS**

The following describes technical solutions of this application with reference to accompanying drawings.

To clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

It should be noted that in this application, the word like "example" or "for example" represents giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

In addition, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one of a, b, and c may indicate a, or b, or c, or a and b, or a and c, or b and c, or a, b, and c, where a, b, and c may be single, or may be plural.

Technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a $5^{th}$ generation ($5^{th}$ generation, 5G) system, a new radio (new radio, NR) system, and a future evolved communication system, for example, a $6^{th}$ generation ($6^{th}$ generation, 6G) system.

The technical solutions provided in this application may be further applied to machine type communication (machine type communication, MTC), long term evolution-machine type communication (Long Term Evolution-machine, LTE-M), a device-to-device (device-to-device, D2D) network, a machine-to-machine (machine-to-machine, M2M) network, an internet of things (internet of things, IoT) network, or an internet of vehicles. Communication manners in an internet of vehicles system are collectively referred to as a vehicle to X (vehicle to X, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

The technical solutions of embodiments of this application may be further applied to various communication systems based on non-orthogonal multiple access technologies, for example, a sparse code multiple access (sparse code multiple access, SCMA) system. Certainly, SCMA may also be referred to as another name in the communication field. Further, the technical solutions of embodiments of this application may be applied to multi-carrier transmission systems using the non-orthogonal multiple access technologies, for example, orthogonal frequency division multiplexing (orthogonal frequency division multiplexing, OFDM), filter bank multi-carrier (filter bank multi-carrier, FBMC), generalized frequency division multiplexing (generalized frequency division multiplexing, GFDM), and filtered orthogonal frequency division multiplexing (filtered-OFDM, F-OFDM) systems using the non-orthogonal multiple access technologies.

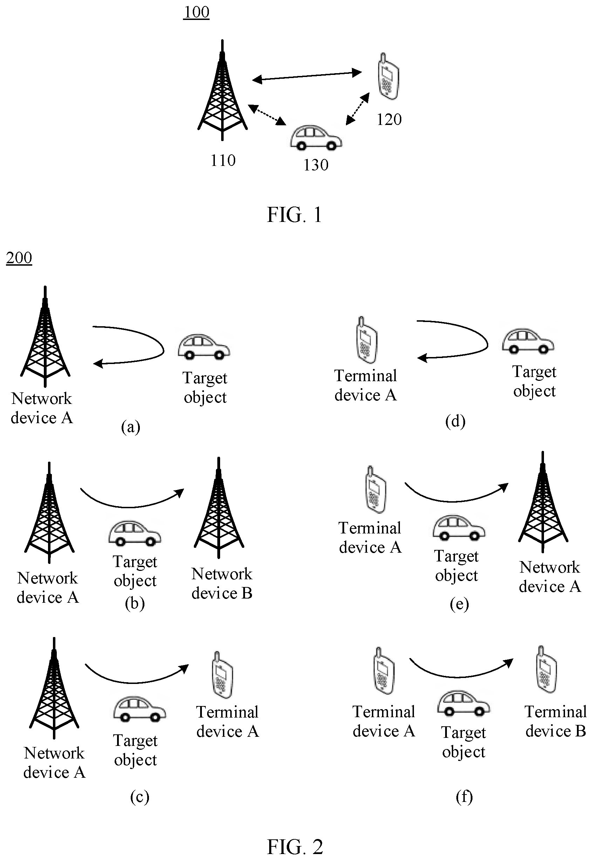

For ease of understanding embodiments of this application, a communication system to which embodiments of this application are applicable is first described in detail with reference to FIG. 1. FIG. 1 is a diagram of a communication system 100 to which embodiments of this application are applicable. As shown in FIG. 1, the communication system 100 may include at least one network device, for example, a network device 110 shown in FIG. 1, and the communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 or the terminal device 120. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device 110 may communicate with the terminal device 120 by using a multi-antenna technology.

In addition, the communication system may further include at least one target object, for example, a target object 130 shown in FIG. 1. The target object 130 is configured to reflect a sensing signal sent by the network device 110 or the terminal device 120 that serves as a transmitter of the sensing signal, so that a receiver of the sensing signal performs sensing based on the signal reflected by the target object 130.

In embodiments of this application, the network device may be any device having a wireless transceiver function. The network device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or may be a gNB in a 5G system, for example, an NR system, or a transmission point (TRP or TP), or one antenna panel or one group of antenna panels (including a plurality of antenna panels) of a base station in a 5G system, or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU may be used for processing a non-real-time protocol and service, for example, may implement functions of a radio resource control (radio resource control, RRC) layer, a service data adaptation protocol (service data adaptation protocol, SDAP) layer, and/or a packet data convergence protocol (packet data convergence protocol, PDCP) layer. The DU may be used for processing a physical layer protocol and a real-time service. For example, the DU may implement functions of a radio link control (radio link control, RLC) layer, a media access control (media access control, MAC) layer, and a physical (physical, PHY) layer. One DU may be connected to only one CU or a plurality of CUs, and one CU may be connected to a plurality of DUs. The CU and the DU may communicate with each other through an F1 interface. The AAU may implement some physical layer processing functions, radio frequency processing, and a function related to an active antenna. Information at the RRC layer is eventually submitted to the PHY layer and is converted into information at the PHY layer, or is converted from information at the PHY layer. Therefore, in this architecture, higher layer signaling such as RRC layer signaling may also be considered as being sent by the DU or sent by the DU and the AAU.

It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and the terminal device uses a transmission resource allocated by the network device (for example, a frequency domain resource or a spectrum resource) to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and a low transmit power, and are applicable to providing a highspeed data transmission service.

The network device in a vehicle to everything (vehicle to everything, V2X) technology may be a road side unit (road side unit, RSU). A plurality of network devices in the communication system may be base stations of a same type, or may be base stations of different types. The base station may communicate with the terminal device, or may communicate with the terminal device via a relay station.

The network device in this application may also be a device having a sensing function. The device may transmit a sensing signal, and receive and process an echo signal reflected by a target object in an environment. In embodiments of this application, a communication apparatus configured to implement a function of the network device may be a network device, or may be a device having some functions of the base station, or may be an apparatus, for example, a chip system, that can support the network device in implementing the function. The apparatus may be mounted in the network device. This is not limited in embodiments of this application.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of the user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, the terminal device may alternatively be a terminal device in an internet of things (Internet of things, IoT) system. The IoT is an important part of future information technology development. A main technical feature of the IoT is to connect things to a network by using a communication technology, to implement a smart network for human-machine interconnection and thing-thing interconnection. In an IoT technology, massive connections, deep coverage, and power saving of a terminal may be implemented by using, for example, a narrowband (narrowband, NB) technology.

In embodiments of this application, the target object is various tangible objects that can reflect an electromagnetic wave in an environment, for example, may include terrestrial objects such as mountains, forests, or buildings, and may further include movable objects such as a vehicle, an unmanned aerial vehicle, a pedestrian, and a terminal device. The target object may also be referred to as a sensed target, a detected target, a sensed object, a detected object, a sensed device, or the like. This is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD) or a digital versatile disc (digital versatile disc, DVD)), a smart card, and a flash memory component (for example, erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include and/or carry instructions and/or data. For ease of understanding, the following first briefly describes terms used in this application.

1. Subcarrier

In an OFDM system, a frequency domain resource is divided into several sub-resources, and each sub-resource in frequency domain may be referred to as a subcarrier. The subcarrier may also be understood as a minimum granularity of a frequency domain resource.

2. OFDM symbol

The OFDM symbol is a minimum time unit in time domain in an OFDM system.

3. Sensing technology

A technical principle of sensing is different from that of communication. In communication, a transmitter modulates information on a radio wave for sending to a receiver, and the receiver demodulates a signal carried on the radio wave to obtain the information. In sensing, the transmitter needs to send the radio wave in a specific direction. After the radio wave is irradiated to a surface of a target, a reflected wave is generated. The receiver receives and processes the reflected wave to obtain required information such as a position and a speed of the target. It should be noted that more echo signals accumulated at the receiver indicate better sensing performance.

There are usually two types of sensing modes: a monostatic sensing mode and a bistatic sensing mode. For monostatic sensing, a transmitter and a receiver of a sensing signal are a same device. In a sensing process, this station not only needs to send the sensing signal, but also needs to receive a reflected signal of the sensing signal from a surface of a target. Therefore, the monostatic sensing mode is also referred to as a self-transmit and self-receive mode. For bistatic sensing, a transmitter and a receiver of a sensing signal are two different devices. In a sensing process, after a sensing station A sends the sensing signal, a sensing station B receives a reflected signal of the sensing signal from a surface of a target. Therefore, the bistatic sensing mode is also referred to as an A-transmit and B-receive mode.

It should be understood that the transmitter may be a network device, or may be a terminal device, and the receiver may be a network device, or may be a terminal device. This is not limited in embodiments of this application.

FIG. 2 is a diagram of application scenarios in different sensing modes. As shown in FIG. 2, from a perspective of a sensing mode, sensing may include six scenarios. Scenario (a) is a monostatic sensing scenario. A network device A sends a sensing signal, and receives a reflected signal of the sensing signal from a target object. Scenario (b) is a bistatic sensing scenario. A network device A sends a sensing signal, and a network device B receives a reflected signal of the sensing signal from a target object. Scenario (c) is a bistatic sensing scenario. A network device A sends a sensing signal, and a terminal device A receives a reflected signal of the sensing signal from a target object. Scenario (d) is a monostatic sensing scenario. A terminal device A sends a sensing signal, and receives a reflected signal of the sensing signal from a target object. Scenario (e) is a bistatic sensing scenario. A terminal device A sends a sensing signal, and a network device A receives a reflected signal of the sensing signal from a target object. Scenario (f) is a bistatic sensing scenario. A terminal device A sends a sensing signal, and a terminal device B receives a reflected signal of the sensing signal from a target object.

4. Coherent processing time

The coherent processing time is a time period that is much longer than a sending periodicity of a sensing signal. Within the coherent processing time, a transmitter sends a plurality of sensing signals in a same beam direction, a receiver receives an echo signal of each sensing signal, and performs coherent combination on echo signals of all the sensing signals sent within the time period, to implement ranging and speed measurement of a target. The coherent combination may generally be implemented by performing matched filtering and Fourier transform on all the echo signals within the time period.

5. Positioning reference signal (positioning reference signal, PRS)

The PRS is a reference signal used for downlink positioning measurement. In a downlink positioning technical solution and an uplink and downlink joint positioning technical solution, a terminal device may obtain a positioning measurement value by receiving and measuring a PRS signal sent by each network device. The downlink positioning technical solution may be, for example, a downlink time difference of arrival (downlink time difference of arrival, DL-TDOA) positioning method or a downlink angle-of-departure (downlink angle of departure, DL-AoD) positioning method. The uplink and downlink joint positioning technical solution may be, for example, a multi-cell round trip time (multi-cell round trip time, Multi-cell RTT) positioning method.

A PRS sequence is a Gold sequence, and an initial value of the PRS sequence is represented by the following formula:

$$c = \left( 2^{22} \times \left\lfloor \frac{n_{ID,seq}^{PRS}}{1024} \right\rfloor + 2^{10} \times (N_{symb}^{slot} \times n_{s,f}^{\mu} + l + 1) \times (2 \times (n_{ID,seq}^{PRS} \bmod 1024) + 1) + (n_{ID,seq}^{PRS} \bmod 1024) \right) \bmod 2^{31} \quad ,$$

where $n_{ID,seq}^{PRS}$ is configured by using a higher layer parameter *dl-PRS-SequenceID, l* is a position of an OFDM symbol occupied by a reference signal in a slot, $n_{s,f}^{\mu}$ is a sequence number of the slot, and $N_{symb}^{slot}$ is a quantity of OFDM symbols in the slot.

In NR, a definition of a PRS positioning frequency layer (positioning frequency layer) is introduced to distinguish between an intra-frequency measurement PRS and an inter-frequency measurement PRS. Specifically, definitions and related concepts of the PRS frequency layer, a PRS resource set (resource set), and a PRS resource (resource) in the NR are summarized below.

One PRS positioning frequency layer is a collection of PRS resource sets that share a same subcarrier spacing (subcarrier spacing, SCS), a same cyclic prefix (cyclic prefix, CP) type, a same PRS bandwidth, and a same start physical resource block (physical resource block, PRB) position that are from one or more TRPs.

One PRS resource set is a set of PRS resources from a same TRP.

A PRS resource set may be configured as follows:

configuring a PRS sending periodicity parameter to support a maximum of 10.24s when a subcarrier spacing is 30 kHz;
configuring a quantity of PRS resource repetitions to support a maximum of 32, and to optionally support {1, 2, 4, 6, 8, 16, 32}; and
configuring a PRS frequency-domain comb size to support {2, 4, 6, 12}; and configuring a number of PRS symbols to support {2, 4, 6, 12}. It should be understood that the comb size indicates a spacing between adjacent subcarriers occupied by a PRS on a frequency domain resource.

One PRS resource is a set of resource elements (resource element, RE) set used for PRS transmission. In time domain, the RE set may include one or more consecutive symbols in one slot.

A PRS resource may be configured as follows:

configuring an ID of a PRS sequence to determine an initial value of a PRS sequence; and
configuring a PRS frequency-domain comb size to support {2, 4, 6, 12}. Different from the comb size defined in the resource set, the comb size defined in the resource is used in a round trip time (round trip time, RTT) solution.

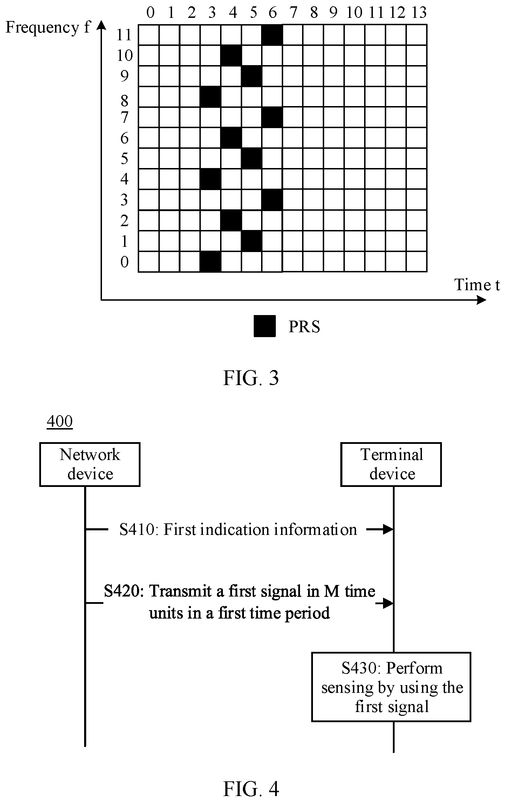

FIG. 3 is a diagram of mapping of PRS time-frequency resources. A horizontal axis is time (in a unit of t), and a vertical axis is frequency (in a unit of f). When a quantity of symbols is 4 and a comb size is 4, it is assumed that a time domain resource occupied by a PRS starts from a symbol numbered 3. In one slot, mapping of the PRS on 12 subcarrier resources is shown in FIG. 3.

With the development of communication technologies, an integrated sensing and communication technology is considered as one of the key technologies that can expand a service capability of a mobile communication network. This technology aims to integrate wireless communication and sensing functions into a same system, and use various propagation characteristics of radio signals to construct a capability of detecting, tracking, and imaging a target, so that wireless communication and sensing capabilities are integrated into one network, thereby achieving harmonious coexistence, and even mutual benefit.

To reduce sensing resource overheads, currently, a solution of multiplexing a communication resource and a sensing resource is proposed. For example, sensing is performed by using the foregoing PRS. During sensing, first, a resource that meets a sensing requirement needs to be configured, and then resource multiplexing is performed. Currently, it is difficult to meet a sensing requirement based on a configuration of the sensing resource.

In view of this, embodiments of this application provide a communication method and a communication apparatus. A related resource of a sensing signal is configured, for example, information such as a time unit occupied by the sensing signal, a signal sequence used to send the sensing signal, and a time domain coefficient of the sensing signal is configured, so that a receiver can receive the sensing signal based on the information, and perform sensing. A quantity of time units configured in embodiments of this application is selected from a preset value set, so that a sensing requirement can be met.

The communication method and the communication apparatus provided in this application are hereinafter described in detail with reference to the accompanying drawings. It should be understood that the technical solutions of this application may be applied to a wireless communication system, for example, the communication system 100 shown in FIG. 1. There may be a wireless communication connection relationship between two communication apparatuses in the wireless communication system. One of the two communication apparatuses may correspond to the terminal device 120 shown in FIG. 1, for example, may be the terminal device shown in FIG. 1, or may be a chip configured in the terminal device. The other communication apparatus in the two communication apparatuses may correspond to the network device 110 shown in FIG. 1, for example, may be the network device shown in FIG. 1, or may be a chip configured in the network device.

Without loss of generality, the following describes the communication method provided in embodiments of this application in detail by using an interaction process between the terminal device and the network device as an example.

FIG. 4 shows a communication method 400 according to an embodiment of this application. The communication method 400 includes the following steps.

S410: A network device sends first indication information; and correspondingly, a terminal device receives the first indication information.

S420: The network device sends a first signal in M time units in a first time period; and correspondingly, the terminal device receives the first signal in the M time units in the first time period based on the first indication information.

It should be understood that the time unit in embodiments of this application is a unit of a time domain resource, for example, may be a slot (slot), a subframe (subframe), a symbol (symbol), or another time unit defined in the future. It should be noted that the time unit is a measurement unit of time domain, and is not necessarily a minimum time unit.

It should be further understood that the first time period in embodiments of this application is coherent processing time.

S430: The terminal device performs sensing by using the first signal.

Optionally, S430 may specifically include: The terminal device accumulates echo signals in the first time period by using the first signal, and performs sensing, to obtain a sensing result.

The first indication information includes information indicating the M time units occupied by the first signal in the first time period; or the first indication information includes information indicating the M time units occupied by the first signal in the first time period, and at least one of: information used to determine a first signal sequence or information used to determine a time domain coefficient of the first signal; or the first indication information includes information used to determine a first signal sequence and information used to determine a time domain coefficient of the first signal, where the first signal sequence and the time domain coefficient of the first signal are used to determine the first signal.

A value of M belongs to a first value set, and the first value set includes a part or all of 40, 44, 64, 70, 71, 80, 81, 123, 128, 142, 160, 256, 283, or 320.

It should be understood that the first signal may also be referred to as a sensing signal. That the first value set includes the part or all of 40, 44, 64, 70, 71, 80, 81, 123, 128, 142, 160, 256, 283, or 320 may be understood as that the first value set includes at least one of 40, 44, 64, 70, 71, 80, 81, 123, 128, 142, 160, 256, 283, or 320.

It should be understood that the first indication information in embodiments of this application includes different content in different cases.

Case 1: The first indication information includes the information indicating the M time units occupied by the first signal in the first time period.

Case 2: The first indication information includes the information indicating the M time units occupied by the first signal in the first time period and the information used to determine the first signal sequence.

Case 3: The first indication information includes the information indicating the M time units occupied by the first signal in the first time period and the time domain coefficient of the first signal.

Case 4: The first indication information includes the information indicating the M time units occupied by the first signal in the first time period, the information used to determine the first signal sequence, and the time domain coefficient of the first signal.

Case 5: The first indication information includes the information used to determine the first signal sequence and the time domain coefficient of the first signal.

The time domain coefficient may also be referred to as a time domain scrambling sequence, a time domain scrambling code sequence, or the like, and is used to scramble the first signal sequence. If the time domain coefficient is configured, the first signal may be obtained by scrambling the first signal sequence by using the time domain coefficient.

Optionally, the first indication information may be carried in radio resource control (radio resource control, RRC) layer signaling or media access control (media access control, MAC) layer signaling, or may be carried in other signaling. This is not limited in embodiments of this application.

Optionally, the first signal may be any one of a positioning reference signal PRS, a sounding reference signal (sounding reference signal, SRS), a demodulation reference signal (demodulation reference signal, DMRS), or a channel state information-reference signal (channel state information-reference signal, CSI-RS). This is not limited in embodiments of this application.

According to the communication method in embodiments of this application, a related resource of a sensing signal is configured, for example, information such as a time unit occupied by the sensing signal, a signal sequence used to send the sensing signal, and a time domain coefficient of the sensing signal is configured, so that the terminal device can receive the sensing signal based on the information, and perform sensing. A quantity M of time units configured in embodiments of this application is selected from the preset first value set, so that a sensing requirement can be met.

In the foregoing embodiments, the value of M belongs to the first value set, and the first value set includes the part or all of 40, 44, 64, 70, 71, 80, 81, 123, 128, 142, 160, 256, 283, or 320.

It should be understood that, in a current technology, a quantity of time units occupied by the sensing signal in the first time period is limited, and a maximum of 32 are supported. For example, a value in {1, 2, 4, 6, 8, 16, 32} is supported. However, the quantity of time units occupied by the sensing signal configured in embodiments of this application allows

**EP 4 780 055 A1**

additional M time units to be supported. A specific quantity of time units occupied by the sensing signal is set, so that it can be ensured that the communication method in embodiments of this application supports a desired sensing requirement.

It should be further understood that when the first signal is a PRS, M does not exceed a PRS resource periodicity configured in a PRS resource set.

The following describes a selection principle of a value in the first value set in scenarios.

Scenario 1: The network device performs self-transmitting and self-receiving, and the first value set is {40, 64, 71, 80, 123, 128, 142, 160, 256, 283, 320}.

First, a selection process of 142 in the foregoing first value set is described. In the sensing scenario in which the network device performs self-transmitting and self-receiving, for example, for transmitting a sensing signal within coherent processing time, a power $P_r$ of the sensing signal received by a radar may be obtained through calculation according to the following formula:

$$P_r = P_t \times G_t \times G_r \times PL_s ,$$

where

$P_t$ indicates a transmit power of the network device, $G_t$ indicates a transmit antenna gain, G, indicates a receive antenna gain, and $PL_s$ indicates a path loss of the signal reflected from a transmitter to a receiver through a target object.

It is assumed that a path loss from the transmitter of the sensing signal to the target object is $PL(d_1)$, a path loss from the target object to the receiver of the sensing signal is $PL(d_2)$, $d_1$ is a distance between the transmitter of the sensing signal and the target object, and $d_2$ is a distance between the target object and the receiver of the sensing signal. The path loss $PL_s$ of the signal reflected from the transmitter to the receiver through the target object may be obtained through calculation according to the following formula:

$$PL_s = PL(d_1) + PL(d_2) + 10 \times \log_{10}(\frac{\lambda^2}{4\pi}) - 10 \times \log_{10} RCS ,$$

where

$\lambda$ is a wavelength of the sensing signal, in a unit of meter, and a radar cross section (radar cross section, RCS) is in a unit of square meter.

The path loss may be obtained through calculation by using an existing path loss model, that is, may be obtained through calculation according to the following formula:

$$PL = 28 + 22 \times \log_{10} d + 20 \times \log_{10} f ,$$

where

d indicates a distance, in a unit of meter, and may be specifically the distance $d_1$ between the transmitter of the sensing signal and the target object or the distance $d_2$ between the target object and the receiver of the sensing signal; and $f$ indicates a carrier frequency, in a unit of GHz.

The receiver of the sensing signal may obtain a signal processing gain by performing coherent combination on the accumulated received sensing signals within the coherent processing time. Generally, the receiver may perform two-dimensional fast Fourier transform (fast fourier transform, FFT) on the received signals, and a corresponding radar processing gain may be represented according to the following formula:

$$P_{process} = 10 \times \log_{10}(L \times K) ,$$

where

L and K respectively indicate FFT points of a dimension corresponding to the two-dimensional FFT. Here, L indicates a quantity of frequency domain subcarriers occupied by one symbol, and K indicates a quantity of time units that need to be occupied by the sensing signal in the first time period.

A signal-to-noise ratio SNR when the network device senses the target may be represented according to the following formula:

$$SNR = P_r + P_{process} - B \times H - NF ,$$

where

NF indicates a noise figure (noise figure, NF), H indicates a thermal noise power spectrum, and B indicates a bandwidth of the sensing signal, in a unit of Hz.

In a possible scenario, it is assumed that a sensing range is 1 km, a transmit power of the network device is 31 dBm, the bandwidth of the sensing signal is 400 MHz, a subcarrier spacing is 120 kHz, and an antenna gain of the network device for receiving and sending is 32.5 dB. It is considered that a typical RCS of the network device for sensing an unmanned aerial vehicle is -20 dbsm, the NF is 7 decibels (dB), the thermal noise power spectrum is -174 dBm/Hz, and a frequency domain comb size is 2. In this case, it may be determined that the value of L is 1584 based on the bandwidth of the sensing signal and the subcarrier spacing. Different values of K may be obtained for different carrier frequencies and different signal-to-interference-plus-noise ratio thresholds.

For example, it is assumed that the carrier frequency is 28 GHz. The network device performs two-dimensional Fourier transform-based range-velocity spectrum estimation on a sensing echo signal matrix, a signal-to-interference-plus-noise ratio threshold of the detected target is 15 dB, and K=142 may be obtained.

For example, it is assumed that the carrier frequency is 28 GHz. The network device performs two-dimensional Fourier transform-based range-velocity spectrum estimation on a sensing echo signal matrix, a signal-to-interference-plus-noise ratio threshold of the detected target is 12 dB, and K=71 may be obtained.

For example, it is assumed that the carrier frequency is 28 GHz. The network device performs two-dimensional Fourier transform-based range-velocity spectrum estimation on a sensing echo signal matrix, a signal-to-interference-plus-noise ratio threshold of the detected target is 18 dB, and K=283 may be obtained.

For example, it is assumed that the carrier frequency is 26 GHz. The network device performs two-dimensional Fourier transform-based range-velocity spectrum estimation on a sensing echo signal matrix, a signal-to-interference-plus-noise ratio threshold of the detected target is 15 dB, and K=123 may be obtained.

It should be understood that the foregoing merely shows a value of K in a possible scenario as an example. In another different scenario, for example, another sensing range, a transmit power of another network device, another bandwidth, another SNR threshold, another comb size, or the like, another value of K may be obtained. This is not enumerated one by one herein.

In an FDD system, an uplink and a downlink are distinguished based on different frequencies. However, in a TDD system, uplink transmission and downlink transmission are performed in a time division manner at a same frequency. Therefore, in the TDD system, if the sensing signal is a downlink signal, the network device cannot send the sensing signal in an uplink slot. Therefore, during actual configuration, a constraint on a position of the uplink slot needs to be considered.

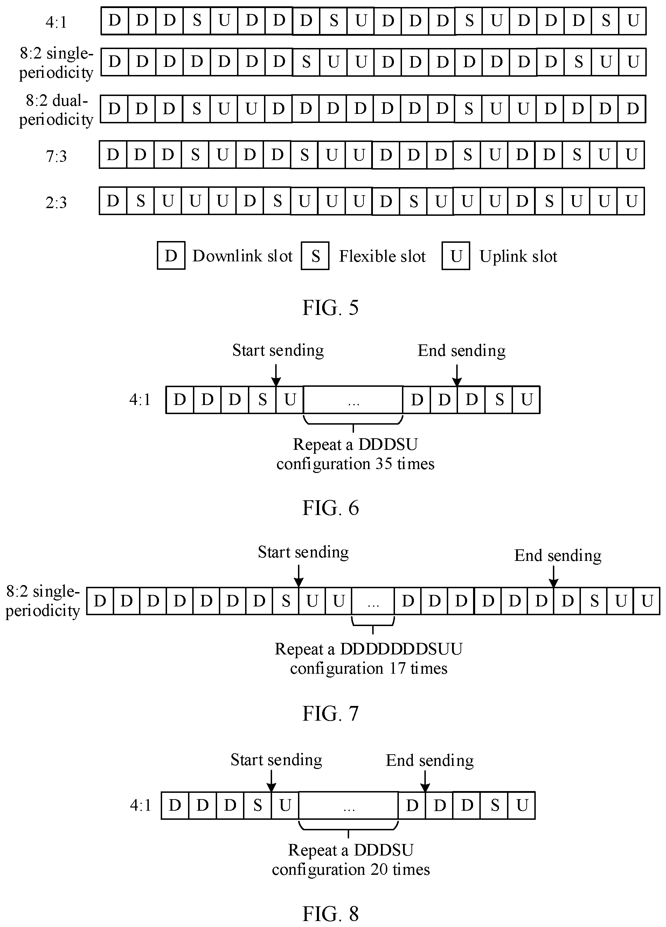

FIG. 5 shows different slot configurations in the TDD system. As shown in FIG. 5, D indicates an uplink (downlink) slot, S indicates a self-contained (self-contained) slot, and U indicates an uplink (uplink) slot. The self-contained slot is also referred to as a flexible slot, and may be used as an uplink slot to send an uplink signal, or may be used as a downlink slot to send a downlink signal. FIG. 5 is a diagram sequentially showing a 4:1 slot configuration, an 8:2 single-periodicity slot configuration, an 8:2 dual-periodicity slot configuration, a 7:3 slot configuration, and a 2:3 slot configuration. The slot configuration herein refers to a ratio of a downlink slot to an uplink slot.

The following uses K=142 as an example to describe a resource configuration when the sensing signal actually needs to occupy 142 time units.

The foregoing different slot configurations are considered. If the sensing signal (namely, the first signal) is a downlink reference signal, for example, a PRS, the PRS cannot be sent in a U slot. It is assumed that a quantity of symbols of the sensing signal is a single symbol. Because K=142, and it is considered that the sensing signal actually needs to occupy 142 time units, that is, the sensing signal is repeatedly sent at least 142 times in time domain, for the 4:1 slot configuration, a maximum quantity of configured resource repetitions is 178; for the 8:2 single-periodicity slot configuration, a maximum quantity of configured resource repetitions is 178; for the 8:2 dual-periodicity slot configuration, a maximum quantity of configured resource repetitions is 178; for the 7:3 dual-periodicity slot configuration, a maximum quantity of configured resource repetitions is 179; and for the 2:3 slot configuration, a maximum quantity of configured resource repetitions is 355.

The 4:1 slot configuration is used as an example. When the PRS is configured to be consecutively distributed in each slot, the network device may select a signal in each slot for sensing. Therefore, in one slot periodicity, the network device may actually accumulate four sensing symbols after five slots. As shown in FIG. 6, if sending starts from an uplink slot, there need to be 35 slot periodicities, and $35 \times 4 = 140$ sensing symbols are accumulated. Then, subsequent two downlink slots need to be repeated, and an actual quantity of configured repetitions is $35 \times 5 + 1 + 2 = 178$.

Similarly, for the 8:2 single-periodicity slot configuration, in one slot periodicity, the network device may actually accumulate eight sensing symbols after 10 slots. As shown in FIG. 7, if sending starts from an uplink slot, 17 slot periodicities need to be repeated, and $17 \times 8 = 136$ symbols are accumulated correspondingly. Then, six downlink slot symbols are added, and an actual quantity of resource repetitions is $17 \times 10 + 2 + 6 = 178$.

Other slot configurations are similar. This is not enumerated herein one by one.

In addition, it is considered that a quantity M of time units occupied by the PRS should meet a sensing requirement without exceeding a resource repetition periodicity, and a sensing capability is positively related to a quantity of times of accumulating an echo signal. A PRS configuration periodicity is determined by a higher layer parameter, and a value range of the PRS configuration periodicity includes $\{2^{\mu} \{4, 5, 8, 10, 16, 20, 32, 40, 64, 80, 160, 320, 640, 1280, 2560, 512, 10240\}\}$, where $\mu$ belongs to $\{0, 1, 2, 3\}$. Therefore, in Scenario 1, values additionally supported by M may be $\{40, 64, 71, 80, 123, 128, 142, 160, 256, 283, 320\}$. 320 is a value greater than 283 and closest to 283 in the PRS configuration periodicity. In this way, when M=320, more sensing signals are sent. This helps improve resource utilization and sensing performance. In addition, a value equal to a value of the PRS configuration periodicity may be selected, namely, 40, 64, 80, 128, 160, or 256. With reference to the foregoing values of K: 71, 123, 142, and 283, a set $\{40, 64, 71, 80, 123, 128, 142, 160, 256, 283, 320\}$ may be obtained.

Scenario 2: The network device sends a signal, the terminal device receives the signal, and the first value set is $\{40, 44, 64, 70, 80, 81, 128\}$.

First, a selection process of 81 in the foregoing first value set is described. In the sensing scenario in which the network device sends the signal and the terminal device receives the signal, similar to Scenario 1, in a possible scenario, it is assumed that a transmit power of the network device is 31 dBm, a bandwidth of the sensing signal is 400 MHz, a subcarrier spacing is 120 kHz, a transmit antenna gain of the network device is 32.5 dB, and a receive antenna gain of the terminal device is 9 dB. It is considered that a typical RCS of the network device for sensing an unmanned aerial vehicle is -20 dbsm, NF is 7 decibels (dB), a thermal noise power spectrum is -174 dBm/Hz, and a frequency domain comb size is 2. It may be determined, based on the bandwidth of the sensing signal and the subcarrier spacing, that the value of L is 1584. Different values of K may be obtained for different carrier frequencies and different signal-to-interference-plus-noise ratio thresholds.

For example, it is assumed that a sensing range of the terminal device is 200 m, a distance between a farthest target object and the network device is 330 m, and the carrier frequency is 28 GHz. The terminal device performs two-dimensional Fourier transform-based range-velocity spectrum estimation on a sensing echo signal matrix, a signal-to-interference-plus-noise ratio threshold of the detected target is 15 dB, and K=81 may be obtained.

For example, it is assumed that a sensing range of the terminal device is 100 m, a distance between a farthest target object and the network device is 500 m, and the carrier frequency is 28 GHz. The terminal device performs two-dimensional Fourier transform-based range-velocity spectrum estimation on a sensing echo signal matrix, a signal-to-interference-plus-noise ratio threshold of the detected target is 15 dB, and K=44 may be obtained.

For example, it is assumed that a sensing range of the terminal device is 200 m, a distance between a farthest target object and the network device is 330 m, and the carrier frequency is 26 GHz. The terminal device performs two-dimensional Fourier transform-based range-velocity spectrum estimation on a sensing echo signal matrix, a signal-to-interference-plus-noise ratio threshold of the detected target is 15 dB, and K=70 may be obtained.

It should be understood that the foregoing merely shows a value of K in a possible scenario as an example. In another different scenario, for example, another sensing range, a transmit power of another network device, another bandwidth, another SNR threshold, another comb size, or the like, another value of K may be obtained. This is not enumerated one by one herein.

In an FDD system, an uplink and a downlink are distinguished based on different frequencies. However, in a TDD system, uplink transmission and downlink transmission are performed in a time division manner at a same frequency. Therefore, in the TDD system, if the sensing signal is a downlink signal, the network device cannot send the sensing signal in an uplink slot. Therefore, during actual configuration, a constraint on a position of the uplink slot needs to be considered.

The following uses K=81 as an example to describe a resource configuration when the sensing signal actually needs to occupy 81 time units.

Different slot configurations in the TDD system are considered. If the sensing signal (namely, the first signal) is a downlink reference signal, for example, a PRS, the PRS cannot be sent in a U slot. It is assumed that a quantity of symbols of the sensing signal is a single symbol. Because K=81, and it is considered that the sensing signal actually needs to occupy 81 time units, that is, the sensing signal is repeatedly sent at least 81 times in time domain, for a 4:1 slot configuration, a maximum quantity of configured resource repetitions is 102; for an 8:2 single-periodicity slot configuration, a maximum quantity of configured resource repetitions is 103; for an 8:2 dual-periodicity slot configuration, a maximum quantity of configured resource repetitions is 103; for a 7:3 dual-periodicity slot configuration, a maximum quantity of configured resource repetitions is 116; and for a 2:3 slot configuration, a maximum quantity of configured resource repetitions is 204.

The 4:1 slot configuration is used as an example. When the PRS is configured to be consecutively distributed in each slot, the network device may select a signal in each slot for sensing. Therefore, in one slot periodicity, after five slots, the network device may actually accumulate four sensing symbols. As shown in FIG. 8, if sending starts from an uplink slot, there need to be 20 slot periodicities, and 20×4=80 sensing symbols are accumulated. Then, subsequent one downlink slot needs to be repeated, and an actual quantity of configured repetitions is 20×5+1+1=102.

Other slot configurations are similar. This is not enumerated herein one by one.

In addition, it is considered that a quantity M of time units occupied by the PRS should meet a sensing requirement without exceeding a resource repetition periodicity, and a sensing capability is positively related to a quantity of times of accumulating an echo signal. A PRS configuration periodicity is determined by a higher layer parameter, and a value range of the PRS configuration periodicity includes $\{2^{\mu}\{4, 5, 8, 10, 16, 20, 32, 40, 64, 80, 160, 320, 640, 1280, 2560, 512, 10240\}\}$, where $\mu$ belongs to $\{0, 1, 2, 3\}$. Therefore, in Scenario 2, values additionally supported by M may be $\{40, 44, 64, 70, 80, 81, 128\}$. 128 is a value greater than 81 and closest to 81 in the PRS configuration periodicity. In this way, when M=128, more sensing signals are sent. This helps improve resource utilization and sensing performance. In addition, a value equal to a value of the PRS configuration periodicity may be selected, namely, 40, 64, or 80. With reference to the foregoing values of K: 44, 70, and 81, a set $\{40, 44, 64, 70, 80, 81, 128\}$ may be obtained.

In conclusion, a union set of the set $\{40, 64, 71, 80, 123, 128, 142, 160, 256, 283, 320\}$ corresponding to Scenario 1 and the set $\{40, 44, 64, 70, 80, 81, 128\}$ corresponding to Scenario 2 is used to obtain values in the first value set, namely, 40, 44, 64, 70, 71, 80, 81, 123, 128, 142, 160, 256, 283, and 320.

In an optional embodiment, the first value set includes 40, 64, 80, 128, 160, 256, and 320; or the first value set includes 64, 128, and 256; or the first value set includes 44, 71, 81, 123, 142, and 283; or the first value set includes 44, 70, 81, 123, 142, and 283; or the first value set includes 44, 70, 81, 123, and 142.

In a first possible implementation of this embodiment, it is considered that a constraint of the periodicity is equal to the periodicity, and a parameter in the first value set does not exceed the configured periodicity. A range of the PRS periodicity is $\{2^{\mu}\{4, 5, 8, 10, 16, 20, 32, 40, 64, 80, 160, 320, 640, 1280, 2560, 512, 10240\}\}$, where $\mu$ belongs to $\{0, 1, 2, 3\}$. First, a value greater than 283 and closest to 283 in the PRS configuration periodicity is considered, namely, 320. 320 is used as a value included in the first value set. Then, another value that meets the periodicity constraint is selected, to obtain the first value set including 40, 64, 80, 128, 160, 256, and 320.

In a second possible implementation of this embodiment, it is considered that the parameter is set to a power of 2, filtering is performed to obtain the first value set including 64, 128, and 256.

In a third possible implementation of this embodiment, an actual scenario requirement is considered, and the first value set includes 44, 71, 81, 123, 142, and 283.

In a fourth possible implementation of this embodiment, an actual scenario requirement is considered, and the first value set includes 44, 70, 81, 123, 142, and 283.

In a fifth possible implementation of this embodiment, it is considered that the signal-to-interference-plus-noise ratio threshold is 15 dB. A K value corresponding to 15 dB is selected. Therefore, the first value set includes 44, 70, 81, 123, and 142.

In a possible scenario, the terminal device not only performs sensing by using the first signal, but also may perform positioning measurement by using the first signal. That is, the terminal device performs sensing and positioning measurement by using the first signal. In this way, a sensing requirement is met, a sensing resource can be effectively multiplexed, and resource overheads are reduced. In this scenario, the first signal may be, for example, the PRS.

In another possible scenario, the terminal device performs sensing by using the first signal, and the network device may also perform sensing by using the first signal. In this way, the network device may accumulate echo signals in the first time period by using the first signal; and perform sensing, to obtain a sensing result.

In another possible scenario, the terminal device performs sensing by using the first signal, and another device (for example, another terminal device or another network device) may also perform sensing by using the first signal.

Optionally, the method further includes: The network device sends indication information to the terminal device, where the indication information indicates the terminal device to report the sensing result; and correspondingly, the terminal device receives the indication information. The terminal device reports the sensing result to the network device in response to the indication information.

In an optional embodiment, the first signal sequence is determined based on a pseudo-random sequence, an initial value of the pseudo-random sequence is determined based on a first value, and a value of the first value is indicated by the information used to determine the first signal sequence.

It should be understood that the network device may first determine the first value, then determine the initial value of the pseudo-random sequence based on the first value, and determine the first signal sequence based on the initial value of the pseudo-random sequence.

In an optional embodiment, the first signal sequences in different time units are the same.

Currently, initial values of pseudo-random sequences used by some reference signals (for example, PRSs) change with different time domain resource positions. If these reference signals are used as sensing signals, the sensing signals sent by the network device in coherent processing time are different. A self-sending and self-receiving scenario is used as an example. When receiving and accumulating echo signals of the sensing signal sent by the network device, the network device is also affected by a sensing signal sent by another network device (namely, an inter-network device interference signal) and noise. Because sensing symbols sent by all network devices are constantly changing, when a network device A performs coherent processing on echo signals, an interference signal randomly affects an interference level of target detection, and as a result, a large target sensing blind spot is generated.

Therefore, the first signal sequence in embodiments of this application is fixed in same coherent processing time, and does not change with a change in a time domain resource position. When the network device performs echo signal coherent accumulation, an interference signal is concentrated in an area near a zero speed in a velocity-range spectrum, and affects only detection of a low-speed or zero-speed target, but does not affect detection of another target. This helps improve sensing performance.

In an optional embodiment, the initial value c of the pseudo-random sequence satisfies any one of the following:

$$c = (2^{10} \times (2 \times N + 1) + N) \bmod 2^{31},$$

or

$$c = \left(2^{22} \times \left\lfloor \frac{N}{1024} \right\rfloor + 2^{10} \times (2 \times (N \bmod 1024) + 1) + (N \bmod 1024)\right) \bmod 2^{31},$$

or

$$c = (2^{17} \times (2 \times N + 1) + 2 \times N) \bmod 2^{31},$$

where

N indicates the first value, and N is an integer greater than or equal to 0.

For example, N is a cell identity (ID), namely, a function of a cell ID of the initial value of the pseudo-random sequence.

For example, N is a PRS sequence ID, namely, a function of a PRS sequence ID of the initial value of the pseudo-random sequence.

It should be understood that N may be agreed on in a protocol, or may be configured by the network device by using higher layer signaling. This is not limited in embodiments of this application.

In an optional embodiment, the time domain coefficient of the first signal includes M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

When the first indication information includes the time domain coefficient of the first signal, it indicates that the network device scrambles the first signal sequence in time domain. In this way, detection performance for the zero-speed or low-speed target can be improved. Specifically, the M elements included in the time domain coefficient of the first signal are sequentially arranged in a sequence form, and a sequence length is the same as the quantity of time units occupied by the first signal in the first time period. Therefore, one element corresponds to one time unit, and a product of a first signal sequence in each time unit and a corresponding element in the time unit is a first signal sent in the time unit.

For example, the time domain coefficient of the first signal may be obtained based on $w_i[n]$, where $w_i[n]$ is an $i^{th}$ row or an $i^{th}$ column in a discrete Fourier transform (discrete fourier transform, DFT) matrix **W**, $\mathbf{W} = [w_0, w_1, \cdots w_i, \cdots, w_{Q-1}]$, or

$\mathbf{W} = [w_0, w_1, \cdots w_i, \cdots, w_{Q-1}]$, $w_i[n] = \exp(\dfrac{j \times 2\pi}{Q} \times i \times n)$, where $n = 0, 1, 2, \cdots, Q-1$, Q is a length of $w_i[n]$, and T indicates transpose.

In a possible implementation, an element whose sequence number is a in the time domain coefficient is an element whose sequence number is b in $w_i[n]$, where a and b satisfy: b=a mod Q.

For example, a value of Q is 19 or a multiple of 19.

For example, a value of Q is 3 or a multiple of 3.

For example, Q is $2^r$, and r is a positive integer. Optionally, r=6.

It should be understood that, in embodiments of this application, the information used to determine the time domain coefficient of the first signal may be information used to determine $w_i[n]$, and the terminal device may determine $w_i[n]$ based on the information used to determine $w_i[n]$, and then determine the time domain coefficient of the first signal based on $w_i[n]$.

In a possible implementation, the first indication information may include an information element (information element, IE), and the IE indicates $w_i[n]$. For example, the IE includes information indicating i and Q. Further, Q may be selected from a set {19, 38, 57}.

In an optional embodiment, to further reduce overheads of the sensing resource, a quantity of symbols configured for the first signal is allowed to support a single symbol. For example, the quantity of symbols of the first signal may be selected from a set {1, 2, 4, 6, 12}. For a sensing scenario, a single symbol can meet a sensing requirement, and implement sensing on a target.

The PRS is used as an example. When the quantity $L_{PRS}$ of symbols configured for the first signal may be a single symbol, a corresponding higher layer parameter may be selected from a set $\{L_{PRS}, K_{comb}^{PRS}\} = \{1, 2\}$, {1, 4}, {1, 6}, and {1, 12}, to determine a comb size of the first signal.

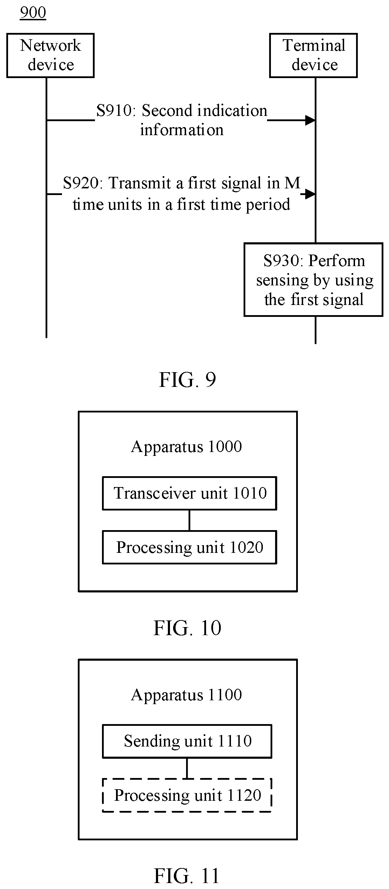

FIG. 9 shows another communication method 900 according to an embodiment of this application. The method 900 includes the following steps.

S910: A network device sends second indication information; and correspondingly, a terminal device receives the second indication information.

S920: The network device sends a first signal in M time units in a first time period; and correspondingly, the terminal device receives the first signal in the M time units in the first time period based on the second indication information.

S930: The terminal device performs sensing by using the first signal.

The second indication information includes information used to determine a first signal sequence and information used to determine a time domain coefficient of the first signal, and the first signal is determined based on the first signal sequence and the time domain coefficient of the first signal. The first signal sequence is determined based on a pseudo-random sequence, and an initial value of the pseudo-random sequence is determined based on a first value. A value of the first value is indicated by the information used to determine the first signal sequence; a value of the first value is predefined; or a value of the first value is indicated by third indication information, and the third indication information is carried in higher layer signaling.

It should be understood that the network device may first determine the first value, next, determine the initial value of the pseudo random sequence based on the first value, then determine the first signal sequence based on the initial value of the pseudo random sequence, and determine the first signal based on the first signal sequence and the time domain coefficient of the first signal.

According to the communication method in embodiments of this application, the information used to determine the first signal sequence and the information used to determine the time domain coefficient of the first signal are configured, so that the terminal device can receive the sensing signal based on the information and perform sensing, thereby meeting a sensing requirement.

For other detailed descriptions of embodiments of this application, refer to the method 400. Details are not described herein again.

In an optional embodiment, the first signal sequences in different time units are the same.

In an optional embodiment, the initial value c of the pseudo-random sequence satisfies any one of the following:

$$c = (2^{10} \times (2 \times N + 1) + N) \bmod 2^{31},$$

or

$$c = \left(2^{22} \times \left\lfloor \frac{N}{1024} \right\rfloor + 2^{10} \times (2 \times (N \bmod 1024) + 1) + (N \bmod 1024)\right) \bmod 2^{31},$$

or

$$c = (2^{17} \times (2 \times N + 1) + 2 \times N) \bmod 2^{31},$$

where

N indicates the first value, and N is an integer greater than or equal to 0.

In an optional embodiment, the time domain coefficient of the first signal includes M elements, a first signal sent in an mth time unit in the M time units is a product of the first signal sequence and an mth element in the time domain coefficient of the first signal, m is an integer greater than 0, and m belongs to {1, 2,..., M}.

It should be understood that sequence numbers of the foregoing processes do not mean execution sequences. The execution sequence of the processes should be determined based on functions and internal logic of the processes, and should not be construed as any limitation on implementation processes of embodiments of this application.

With reference to FIG. 1 to FIG. 9, the foregoing describes in detail the communication method according to embodiments of this application. With reference to FIG. 10 to FIG. 12, the following describes in detail a communication apparatus according to embodiments of this application.

FIG. 10 shows a communication apparatus 1000 according to an embodiment of this application. The apparatus 1000 includes a transceiver unit 1010 and a processing unit 1020.

The transceiver unit 1010 is configured to: receive first indication information; and receive a first signal in M time units in a first time period based on the first indication information. The processing unit 1020 is configured to perform sensing by using the first signal. The first indication information includes information indicating the M time units occupied by the first signal in the first time period; or the first indication information includes information indicating the M time units occupied by the first signal in the first time period, and at least one of: information used to determine a first signal sequence or information used to determine a time domain coefficient of the first signal; or the first indication information includes information used to determine a first signal sequence and information used to determine a time domain coefficient of the first signal, where the first signal sequence and the time domain coefficient of the first signal are used to determine the first signal; and a value of M belongs to a first value set, and the first value set includes a part or all of 40, 44, 64, 70, 71, 80, 81, 123, 128, 142, 160, 256, 283, or 320.

Optionally, the first signal sequence is determined based on a pseudo-random sequence, an initial value of the pseudo-random sequence is determined based on a first value, and a value of the first value is indicated by the information used to determine the first signal sequence.

Optionally, the first signal sequences in different time units are the same.

Optionally, the initial value c of the pseudo-random sequence satisfies any one of the following:

$$c = (2^{10} \times (2 \times N + 1) + N) \bmod 2^{31},$$

or

$$c = \left( 2^{22} \times \left\lfloor \frac{N}{1024} \right\rfloor + 2^{10} \times (2 \times (N \bmod 1024) + 1) + (N \bmod 1024) \right) \bmod 2^{31},$$

or

$$c = (2^{17} \times (2 \times N + 1) + 2 \times N) \bmod 2^{31},$$

where
N indicates the first value, and N is an integer greater than or equal to 0.

Optionally, the time domain coefficient of the first signal includes M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

Optionally, the first value set includes 40, 64, 80, 128, 160, 256, and 320; or the first value set includes 64, 128, and 256; or the first value set includes 44, 71, 81, 123, 142, and 283; or the first value set includes 44, 70, 81, 123, 142, and 283; or the first value set includes 44, 70, 81, 123, and 142.

Optionally, the processing unit 1020 is further configured to perform positioning measurement by using the first signal.

Optionally, the processing unit 1020 is further configured to: accumulate echo signals in the first time period by using the first signal; and perform sensing, to obtain a sensing result.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1000 may be specifically the terminal device in the foregoing embodiments, and the apparatus 1000 may be configured to perform the procedures and/or the steps corresponding to the terminal device in the foregoing method embodiments. To avoid repetition, details are not described herein again.

The apparatus 1000 in the foregoing solutions has a function of implementing a corresponding step performed by the terminal device in the foregoing methods. The function may be implemented by hardware, or may be implemented by hardware by executing corresponding software. The hardware or software includes one or more modules corresponding to the foregoing function. For example, the transceiver unit 1010 may include a sending unit and a receiving unit. The sending unit may be configured to implement steps and/or procedures that correspond to the transceiver unit and that are used to perform a sending action. The receiving unit may be configured to implement steps and/or procedures that correspond to the transceiver unit and that are used to perform a receiving action. The sending unit may be replaced with a transmitter, and the receiving unit may be replaced with a receiver, to respectively perform sending and receiving operations and related processing operations in the method embodiments.

In embodiments of this application, the apparatus 1000 in FIG. 10 may alternatively be a chip or a chip system, for example, a system on chip (system on chip, SoC). Correspondingly, the transceiver unit 1010 may be a transceiver circuit of the chip. This is not limited herein.

FIG. 11 shows another communication apparatus 1100 according to an embodiment of this application. The apparatus 1100 includes a sending unit 1110.

The sending unit 1110 is configured to send first indication information; and send a first signal in M time units in a first time period. The first indication information includes information indicating the M time units occupied by the first signal in the first time period; or the first indication information includes information indicating the M time units occupied by the first signal in the first time period, and at least one of: information used to determine a first signal sequence or information used to determine a time domain coefficient of the first signal; or the first indication information includes information used to determine a first signal sequence and information used to determine a time domain coefficient of the first signal, where the first signal sequence and the time domain coefficient of the first signal are used to determine the first signal; and a value of M belongs to a first value set, and the first value set includes a part or all of 40, 44, 64, 70, 71, 80, 81, 123, 128, 142, 160, 256, 283, or 320.

Optionally, the first signal sequence is determined based on a pseudo-random sequence, an initial value of the pseudo-random sequence is determined based on a first value, and a value of the first value is indicated by the information used to determine the first signal sequence.

Optionally, the first signal sequences in different time units are the same.

Optionally, the initial value c of the pseudo-random sequence satisfies any one of the following:

$$c = (2^{10} \times (2 \times N + 1) + N) \bmod 2^{31},$$

or

$$c = \left(2^{22} \times \left\lfloor \frac{N}{1024} \right\rfloor + 2^{10} \times (2 \times (N \bmod 1024) + 1) + (N \bmod 1024)\right) \bmod 2^{31},$$

or

$$c = (2^{17} \times (2 \times N + 1) + 2 \times N) \bmod 2^{31},$$

where

N indicates the first value, and N is an integer greater than or equal to 0.

Optionally, the time domain coefficient of the first signal includes M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

Optionally, the first value set includes 40, 64, 80, 128, 160, 256, and 320; or the first value set includes 64, 128, and 256; or the first value set includes 44, 71, 81, 123, 142, and 283; or the first value set includes 44, 70, 81, 123, 142, and 283; or the first value set includes 44, 70, 81, 123, and 142.

Optionally, the apparatus 1100 further includes a processing unit 1120, configured to: accumulate echo signals in the first time period by using the first signal; and perform sensing, to obtain a sensing result.

It should be understood that the apparatus 1100 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1100 may be specifically the network device in the foregoing embodiments, and the apparatus 1100 may be configured to perform procedures and/or steps corresponding to the network device in the foregoing method embodiments. To avoid repetition, details are not described herein again.

The apparatus 1100 in the foregoing solutions has a function of implementing a corresponding step performed by the network device in the foregoing methods. The function may be implemented by hardware, or may be implemented by hardware by executing corresponding software. The hardware or software includes one or more modules corresponding to the foregoing function. For example, the sending unit 1110 may be replaced with a transmitter, and the processing unit 1120 may be replaced with a processor, to respectively perform a sending operation and a related processing operation in the method embodiments.

In embodiments of this application, the apparatus 1100 in FIG. 11 may alternatively be a chip or a chip system, for example, a system on chip (system on chip, SoC). Correspondingly, the sending unit 1110 may be a transceiver circuit of the chip. This is not limited herein.

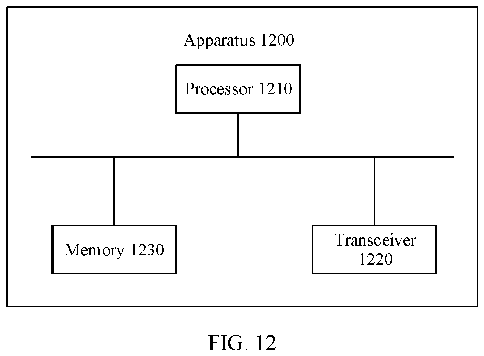

FIG. 12 shows another communication apparatus 1200 according to an embodiment of this application. The apparatus 1200 includes a processor 1210, a transceiver 1220, and a memory 1230. The processor 1210, the transceiver 1220, and the memory 1230 communicate with each other through an internal connection path. The memory 1230 is configured to store instructions. The processor 1210 is configured to execute the instructions stored in the memory 1230, to control the transceiver 1220 to send a signal and/or receive a signal.

It should be understood that the apparatus 1200 may be specifically the terminal device or the network device in the foregoing embodiments, and the apparatus 1200 may be configured to perform steps and/or procedures corresponding to the terminal device or the network device in the foregoing method embodiments. Optionally, the memory 1230 may include a read-only memory and a random access memory, and provide instructions and data for the processor. A part of the memory may further include a non-volatile random access memory. For example, the memory may further store information about a device type. The processor 1210 may be configured to execute the instructions stored in the memory, and when the processor 1210 executes the instructions stored in the memory, the processor 1210 is configured to perform the steps and/or procedures corresponding to the terminal device or the network device in the foregoing method embodiments. The transceiver 1220 may include a transmitter and a receiver. The transmitter may be configured to implement steps and/or procedures that correspond to the transceiver and that are used to perform a sending action, and the receiver may be configured to implement steps and/or procedures that correspond to the transceiver and that are used to perform a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods may be implemented by using a hardware integrated logical circuit in a processor, or by using instructions in a form of software. The steps of the methods disclosed with reference to embodiments of this application may be directly performed by a hardware processor, or may be performed by a combination of hardware and software units in the processor. The software unit may be located in a mature storage medium in the art, for example, a random access memory, a flash memory, a read-only memory, a programmable read-only memory, an electrically erasable programmable memory, a register, or the like. The storage medium is located in the memory, and the processor reads the instructions in the memory and completes the steps in the foregoing methods in combination with hardware of the processor. To avoid repetition, details are not described herein again.

This application further provides a computer-readable storage medium. The computer-readable storage medium is configured to store a computer program, and the computer program is used to implement the methods corresponding to the terminal device or the network device in the foregoing embodiments.

This application further provides a computer program product. The computer program product includes a computer program (which may also be referred to as code or instructions). When the computer program is run on a computer, the computer may perform the method corresponding to the terminal device or the network device in the foregoing embodiments.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving first indication information; and
   receiving a first signal in M time units in a first time period based on the first indication information, and performing sensing by using the first signal, wherein
   the first indication information comprises information indicating the M time units occupied by the first signal in the first time period; or the first indication information comprises information indicating the M time units occupied by the first signal in the first time period, and at least one of: information used to determine a first signal sequence or information used to determine a time domain coefficient of the first signal; or the first indication information comprises information used to determine a first signal sequence and information used to determine a time domain coefficient of the first signal, wherein the first signal sequence and the time domain coefficient of the first signal are used to determine the first signal; and
   a value of M belongs to a first value set, and the first value set comprises a part or all of 40, 44, 64, 70, 71, 80, 81, 123, 128, 142, 160, 256, 283, or 320.

2. The method according to claim 1, wherein the first signal sequence is determined based on a pseudo-random sequence, an initial value of the pseudo-random sequence is determined based on a first value, and a value of the first value is indicated by the information used to determine the first signal sequence.

3. The method according to claim 2, wherein the first signal sequences in different time units are the same.

4. The method according to claim 2 or 3, wherein the initial value c of the pseudo-random sequence satisfies any one of the following:

$$c = (2^{10} \times (2 \times N + 1) + N) \bmod 2^{31},$$

or

$$c = \left(2^{22} \times \left\lfloor \frac{N}{1024} \right\rfloor + 2^{10} \times (2 \times (N \bmod 1024) + 1) + (N \bmod 1024)\right) \bmod 2^{31},$$

or

$$c = (2^{17} \times (2 \times N + 1) + 2 \times N) \bmod 2^{31},$$

wherein

N indicates the first value, and N is an integer greater than or equal to 0.

5. The method according to any one of claims 1 to 4, wherein the time domain coefficient of the first signal comprises M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

6. The method according to any one of claims 1 to 5, wherein the first value set comprises 40, 64, 80, 128, 160, 256, and 320; or

   the first value set comprises 64, 128, and 256; or
   the first value set comprises 44, 71, 81, 123, 142, and 283; or
   the first value set comprises 44, 70, 81, 123, 142, and 283; or
   the first value set comprises 44, 70, 81, 123, and 142.

7. The method according to any one of claims 1 to 6, wherein the method further comprises:
   performing positioning measurement by using the first signal.

8. The method according to any one of claims 1 to 7, wherein performing sensing by using the first signal comprises:
   accumulating echo signals in the first time period by using the first signal; and performing sensing, to obtain a sensing result.

9. A communication method, comprising:

   sending first indication information; and
   sending a first signal in M time units in a first time period, wherein
   the first indication information comprises information indicating the M time units occupied by the first signal in the first time period; or the first indication information comprises information indicating the M time units occupied by the first signal in the first time period, and at least one of: information used to determine a first signal sequence or information used to determine a time domain coefficient of the first signal; or the first indication information comprises information used to determine a first signal sequence and information used to determine a time domain coefficient of the first signal, wherein the first signal sequence and the time domain coefficient of the first signal are used to determine the first signal; and
   a value of M belongs to a first value set, and the first value set comprises a part or all of 40, 44, 64, 70, 71, 80, 81, 123, 128, 142, 160, 256, 283, or 320.

10. The method according to claim 9, wherein the first signal sequence is determined based on a pseudo-random sequence, an initial value of the pseudo-random sequence is determined based on a first value, and a value of the first value is indicated by the information used to determine the first signal sequence.

11. The method according to claim 10, wherein the first signal sequences in different time units are the same.

12. The method according to claim 10 or 11, wherein the initial value c of the pseudo-random sequence satisfies any one of the following:

$$c = (2^{10} \times (2 \times N + 1) + N) \bmod 2^{31},$$

or

$$c = \left(2^{22} \times \left\lfloor \frac{N}{1024} \right\rfloor + 2^{10} \times (2 \times (N \bmod 1024) + 1) + (N \bmod 1024)\right) \bmod 2^{31},$$

or

$$c = (2^{17} \times (2 \times N + 1) + 2 \times N) \bmod 2^{31},$$

wherein
N indicates the first value, and N is an integer greater than or equal to 0.

13. The method according to any one of claims 9 to 12, wherein the time domain coefficient of the first signal comprises M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

14. The method according to any one of claims 9 to 13, wherein the first value set comprises 40, 64, 80, 128, 160, 256, and 320; or

   the first value set comprises 64, 128, and 256; or
   the first value set comprises 44, 71, 81, 123, 142, and 283; or
   the first value set comprises 44, 70, 81, 123, 142, and 283; or
   the first value set comprises 44, 70, 81, 123, and 142.

15. The method according to any one of claims 9 to 14, wherein the method further comprises:
   accumulating echo signals in the first time period by using the first signal; and performing sensing, to obtain a sensing result.

16. A communication apparatus, comprising:

   a transceiver unit, configured to: receive first indication information; and receive a first signal in M time units in a first time period based on the first indication information; and
   a processing unit, configured to perform sensing by using the first signal, wherein
   the first indication information comprises information indicating the M time units occupied by the first signal in the first time period; or the first indication information comprises information indicating the M time units occupied by the first signal in the first time period, and at least one of: information used to determine a first signal sequence or information used to determine a time domain coefficient of the first signal; or the first indication information comprises information used to determine a first signal sequence and information used to determine a time domain coefficient of the first signal, wherein the first signal sequence and the time domain coefficient of the first signal are used to determine the first signal; and
   a value of M belongs to a first value set, and the first value set comprises a part or all of 40, 44, 64, 70, 71, 80, 81, 123, 128, 142, 160, 256, 283, or 320.

17. The apparatus according to claim 16, wherein the first signal sequence is determined based on a pseudo-random sequence, an initial value of the pseudo-random sequence is determined based on a first value, and a value of the first value is indicated by the information used to determine the first signal sequence.

18. The apparatus according to claim 17, wherein the first signal sequences in different time units are the same.

19. The apparatus according to claim 17 or 18, wherein the initial value c of the pseudo-random sequence satisfies any one of the following:

$$c = (2^{10} \times (2 \times N + 1) + N) \bmod 2^{31},$$

or

$$c = \left( 2^{22} \times \left\lfloor \frac{N}{1024} \right\rfloor + 2^{10} \times (2 \times (N \bmod 1024) + 1) + (N \bmod 1024) \right) \bmod 2^{31},$$

or

$$c = (2^{17} \times (2 \times N + 1) + 2 \times N) \bmod 2^{31},$$

wherein
N indicates the first value, and N is an integer greater than or equal to 0.

20. The apparatus according to any one of claims 16 to 19, wherein the time domain coefficient of the first signal comprises M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

21. The apparatus according to any one of claims 16 to 20, wherein the first value set comprises 40, 64, 80, 128, 160, 256, and 320; or

   the first value set comprises 64, 128, and 256; or
   the first value set comprises 44, 71, 81, 123, 142, and 283; or
   the first value set comprises 44, 70, 81, 123, 142, and 283; or
   the first value set comprises 44, 70, 81, 123, and 142.

22. The apparatus according to any one of claims 16 to 21, wherein the processing unit is further configured to:
   perform positioning measurement by using the first signal.

23. The apparatus according to any one of claims 16 to 22, wherein the processing unit is further configured to:
   accumulate echo signals in the first time period by using the first signal; and perform sensing, to obtain a sensing result.

24. A communication apparatus, comprising:

   a sending unit, configured to: send first indication information; and send a first signal in M time units in a first time period, wherein
   the first indication information comprises information indicating the M time units occupied by the first signal in the first time period; or the first indication information comprises information indicating the M time units occupied by the first signal in the first time period, and at least one of: information used to determine a first signal sequence or information used to determine a time domain coefficient of the first signal; or the first indication information comprises information used to determine a first signal sequence and information used to determine a time domain coefficient of the first signal, wherein the first signal sequence and the time domain coefficient of the first signal are used to determine the first signal; and
   a value of M belongs to a first value set, and the first value set comprises a part or all of 40, 44, 64, 70, 71, 80, 81, 123, 128, 142, 160, 256, 283, or 320.

25. The apparatus according to claim 24, wherein the first signal sequence is determined based on a pseudo-random sequence, an initial value of the pseudo-random sequence is determined based on a first value, and a value of the first value is indicated by the information used to determine the first signal sequence.

26. The apparatus according to claim 25, wherein the first signal sequences in different time units are the same.

27. The apparatus according to claim 25 or 26, wherein the initial value c of the pseudo-random sequence satisfies any one of the following:

$$c = (2^{10} \times (2 \times N + 1) + N) \bmod 2^{31},$$

or

$$c = \left( 2^{22} \times \left\lfloor \frac{N}{1024} \right\rfloor + 2^{10} \times (2 \times (N \bmod 1024) + 1) + (N \bmod 1024) \right) \bmod 2^{31},$$

or

$$c = (2^{17} \times (2 \times N + 1) + 2 \times N) \bmod 2^{31},$$

wherein
N indicates the first value, and N is an integer greater than or equal to 0.

28. The apparatus according to any one of claims 24 to 27, wherein the time domain coefficient of the first signal comprises M elements, a first signal sent in an $m^{th}$ time unit in the M time units is a product of the first signal sequence and an $m^{th}$ element in the time domain coefficient of the first signal, m is an integer greater than 0, and m belongs to {1, 2,..., M}.

29. The apparatus according to any one of claims 24 to 28, wherein the first value set comprises 40, 64, 80, 128, 160, 256, and 320; or

the first value set comprises 64, 128, and 256; or
the first value set comprises 44, 71, 81, 123, 142, and 283; or
the first value set comprises 44, 70, 81, 123, 142, and 283; or
the first value set comprises 44, 70, 81, 123, and 142.

30. The apparatus according to any one of claims 24 to 29, wherein the apparatus further comprises:
a processing unit, configured to: accumulate echo signals in the first time period by using the first signal; and perform sensing, to obtain a sensing result.

31. A communication apparatus, comprising a processor, wherein when the processor invokes a computer program, the apparatus is enabled to perform the method according to any one of claims 1 to 15.

32. A computer-readable storage medium, configured to store a computer program, wherein the computer program comprises instructions for implementing the method according to any one of claims 1 to 15.

33. A computer program product, wherein the computer program product comprises instructions, and when the instructions are run on a computer, the computer is enabled to perform the method according to any one of claims 1 to 15.

FIG. 1

FIG. 2

FIG. 3

FIG. 4

4:1 | D | D | D | S | U | D | D | D | S | U | D | D | D | S | U | D | D | D | S | U |

8:2 single-periodicity | D | D | D | D | D | D | D | S | U | U | D | D | D | D | D | D | D | S | U | U |

8:2 dual-periodicity | D | D | D | S | U | U | D | D | D | D | D | D | S | U | U | D | D | D | D |

7:3 | D | D | D | S | U | D | D | S | U | U | D | D | D | S | U | D | D | S | U | U |

2:3 | D | S | U | U | U | D | S | U | U | U | D | S | U | U | U | D | S | U | U | U |

| D | Downlink slot   | S | Flexible slot   | U | Uplink slot

**FIG. 5**

Start sending          End sending

4:1 | D | D | D | S | U |        ...        | D | D | D | S | U |

Repeat a DDDSU
configuration 35 times

**FIG. 6**

Start sending                              End sending

8:2 single-periodicity | D | D | D | D | D | D | D | S | U | U |   ...   | D | D | D | D | D | D | D | S | U | U |

Repeat a DDDDDDDSUU
configuration 17 times

**FIG. 7**

Start sending          End sending

4:1 | D | D | D | S | U |        ...        | D | D | D | S | U |

Repeat a DDDSU
configuration 20 times

**FIG. 8**

900

```
Network                           Terminal
device                             device

  |      S910: Second indication        |
  |──────────────────────────────────▶  |
  |             information              |
  |                                      |
  |   S920: Transmit a first signal in M |
  |──────────────────────────────────▶  |
  |     time units in a first time period|
  |                                      |
  |                         ┌────────────────┐
  |                         │  S930: Perform │
  |                         │ sensing by using│
  |                         │  the first signal│
  |                         └────────────────┘
  |                                      |
```

FIG. 9

```
┌──────────────────────────────────┐
│         Apparatus 1000            │
│                                   │
│   ┌──────────────────────────┐    │
│   │  Transceiver unit 1010    │    │
│   └──────────────────────────┘    │
│              │                    │
│   ┌──────────────────────────┐    │
│   │  Processing unit 1020     │    │
│   └──────────────────────────┘    │
│                                   │
└──────────────────────────────────┘
```

FIG. 10

```
┌──────────────────────────────────┐
│         Apparatus 1100            │
│                                   │
│   ┌──────────────────────────┐    │
│   │   Sending unit 1110       │    │
│   └──────────────────────────┘    │
│              │                    │
│   ┌ ─ ─ ─ ─ ─│─ ─ ─ ─ ─ ─ ┐     │
│     Processing unit 1120          │
│   └ ─ ─ ─ ─ ─ ─ ─ ─ ─ ─ ─ ┘     │
│                                   │
└──────────────────────────────────┘
```

FIG. 11

FIG. 12

**INTERNATIONAL SEARCH REPORT**

| International application No. |
| --- |
| **PCT/CN2024/119943** |

| A. | CLASSIFICATION OF SUBJECT MATTER |
| --- | --- |
| | H04W24/08(2009.01)i |

According to International Patent Classification (IPC) or to both national classification and IPC

| B. | FIELDS SEARCHED |
| --- | --- |

Minimum documentation searched (classification system followed by classification symbols)

    IPC: H04L, H04W

Documentation searched other than minimum documentation to the extent that such documents are included in the fields searched

Electronic data base consulted during the international search (name of data base and, where practicable, search terms used)

    CNABS; CNTXT; ENTXTC; DWPI; VEN; 3GPP: 通信感知一体化, 雷达, 回波, 感知, 定位参考信号, 指示, 时域, 系数, 时间单元; integrated sensing and communication, ISAC, sensing, radar, positioning reference signal, PRS, indication, time domain, coefficient, time unit

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2023001183 A1 (VIVO MOBILE COMMUNICATION CO., LTD.) 26 January 2023 (2023-01-26)<br>    entire document | 1-33 |
| A | CN 114598404 A (HUAWEI TECHNOLOGIES CO., LTD.) 07 June 2022 (2022-06-07)<br>    entire document | 1-33 |
| A | CN 115802386 A (YIBIN XGIMI OPTOELECTRONIC CO., LTD.) 14 March 2023 (2023-03-14)<br>    entire document | 1-33 |
| A | US 2021212073 A1 (GUANGDONG OPPO MOBILE TELECOMMUNICATIONS CORP., LTD.) 08 July 2021 (2021-07-08)<br>    entire document | 1-33 |
| A | WO 2023005145 A1 (SPREADTRUM COMMUNICATIONS (SHANGHAI) CO., LTD.) 02 February 2023 (2023-02-02)<br>    entire document | 1-33 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 December 2024** | **30 December 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/119943**

| Patent document cited in search report | | | Publication date (day/month/year) | Patent family member(s) | | | Publication date (day/month/year) |
|---|---|---|---|---|---|---|---|
| WO | 2023001183 | A1 | 26 January 2023 | None | | | |
| CN | 114598404 | A | 07 June 2022 | None | | | |
| CN | 115802386 | A | 14 March 2023 | None | | | |
| US | 2021212073 | A1 | 08 July 2021 | US | 11963206 | B2 | 16 April 2024 |
| | | | | TW | 202033023 | A | 01 September 2020 |
| | | | | JP | 2022507004 | A | 18 January 2022 |
| | | | | JP | 7256262 | B2 | 11 April 2023 |
| | | | | EP | 3843446 | A1 | 30 June 2021 |
| | | | | EP | 3843446 | A4 | 01 September 2021 |
| | | | | EP | 3843446 | B1 | 15 February 2023 |
| | | | | WO | 2020062068 | A1 | 02 April 2020 |
| WO | 2023005145 | A1 | 02 February 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311284114